## Europäisches Patentamt

## European Patent Office

## Office européen des brevets

(11) Publication number: **0 105 422**
**B1**

(12) **EUROPEAN PATENT SPECIFICATION**

(45) Date of publication of patent specification: **06.11.85**

(21) Application number: **83109462.8**

(22) Date of filing: **22.09.83**

(51) Int. Cl.⁴: **F 02 D 23/02, F 02 M 59/44**

(54) Feed system for supercharged diesel engines.

(30) Priority: **28.09.82 IT 6813982**

(43) Date of publication of application:
**18.04.84 Bulletin 84/16**

(45) Publication of the grant of the patent:
**06.11.85 Bulletin 85/45**

(84) Designated Contracting States:
**BE CH DE FR GB LI NL SE**

(56) References cited:
**FR-A-2 382 590**
**GB-A-2 079 364**

(73) Proprietor: **FIAT AUTO S.p.A.**
**Corso Giovanni Agnelli 200**
**I-10135 Torino (IT)**

(72) Inventor: **Filtri, Giorgio**
**Via delle Acacie 16/6**
**I-10024 Moncalieri Torino (IT)**

(74) Representative: **Buzzi, Franco et al**
**c/o Jacobacci-Casetta & Perani S.p.A. Via Alfieri,**
**17**
**I-10121 Torino (IT)**

Courier Press, Leamington Spa, England.

EP 0 105 422 B1

## Description

The present invention relates to a feed system for supercharged diesel engines, of the type comprising a turbosupercharger driven by the engine exhaust gases, an automatic over-pressure valve for the turbosupercharger, a pressure sensor sensing the pressure in the engine induction manifold and arranged to operate the over-pressure valve at a predetermined pressure in the engine induction manifold, and a fuel delivery regulator connected to the engine injection pump and controlled by the pressure in the induction manifold according to a predetermined law.

Feed systems of the above-mentioned type are known from GB—A—2079364 and FR—A—2382590.

The motor vehicle industry currently has as one of its most important objectives the reduction of fuel consumption, both by reducing the weight of vehicles and by optimising the performance of power units, not the least through increasing the transmission ratios.

The latter measure, which is one of those giving the greatest return from the point of view of fuel saving, involves, however, considerable loss of acceleration and pick-up and considerably penalises the overall performance of the vehicle.

Vehicles having diesel engines which, even if provided with supercharging, have power outputs which are often inferior to those of the same models equipped with petrol engines are especially disadvantaged.

The object of the present invention is to provide a feed system for supercharged diesel engines, which allows high power outputs to be obtained for predetermined short periods of time in order to maintain or to increase the acceleration and pick-up of a motor vehicle having high transmission ratios favourable from the aspect of fuel consumption.

Accordingly, the present invention provides a feed system for supercharged diesel engines of the above-mentioned type, characterised in that:

— a three-way two-position valve is placed in a duct connecting the pressure sensor with the induction manifold; said three-way valve being movable between a normally open position, in which it opens the communication from the induction manifold to the pressure sensor, and a closed position in which the said communication is interrupted and the pressure sensor is connected to the atmosphere in order to inhibit operation of the said over-pressure valve;
— the fuel delivery regulator is arranged to increase the delivery of fuel by the injection pump substantially and automatically when the pressure in the induction manifold exceeds a predetermined threshold, and
— a device is associated with the engine accelerator control for moving the three-way two-position valve from its normally open to its closed position in dependence on a predetermined position of opening of the control.

One embodiment of the invention will now be described by way of example, with reference to the appended drawings, in which:

Figure 1 is a schematic view of a diesel engine provided with a feed system according to the present invention;

Figure 2 is a sectional view of a component of the system illustrated in Figure 1;

Figure 3 is a sectional view of another component of the system of Figure 1;

Figure 4 is a view on an enlarged scale of a part of the component illustrated in Figure 2.

With reference to the drawings, there is shown a diesel engine 1, which may equally well be of the direct or indirect injection type, provided with an exhaust manifold 2 which inlets into the turbine 3 of a turbosupercharger 4 having an exhaust 5 and connected to a compressor 6 which receives air from an air filter 8 through a duct 7.

The compressor 6 directs compressed air to an induction manifold 9.

An automatic overpressure valve 11, commonly called a "waste-gate", is mounted in series in a duct 10 connecting the exhaust manifold 2 to the exhaust 5, and is controlled by a pressure sensor 12 connected to the induction manifold 9 through a duct 13.

The injection pump 14 has a device 15 for regulating the fuel delivery in dependence on the pressure existing in the induction manifold.

This pressure is taken through a duct 16 connected to the duct 13.

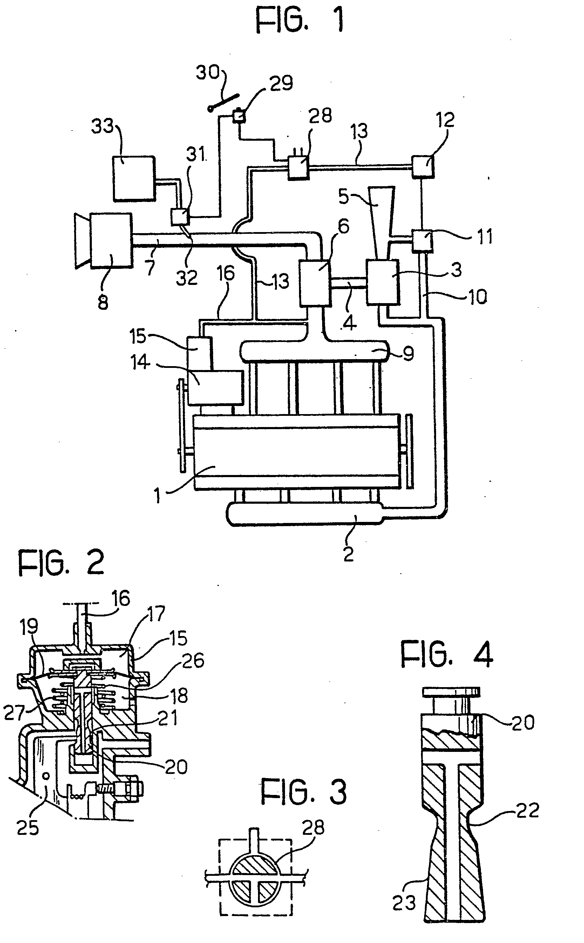

Figure 2 illustrates the part of the device 15 which senses the supercharging pressure existing in the manifold. It is formed by superimposed chambers 17, 18 separated by a resilient diaphragm 19.

The upper of the two chambers is connected to the induction manifold through the duct 16 mentioned previously, while the lower chamber is open to the atmosphere.

Connected in known manner to the diaphragm 19 is a small piston 20 which projects downwardly to slide in a seat 21, and has a profile (illustrated in Figure 4) having an annular groove 22 in its middle portion connected to a frusto-conical part 23.

A feeler 25 is held against the profile of the piston by known means, not illustrated.

A spring 26 coaxial with the piston keeps the diaphragm 19 pressed upwardly with a force of a predetermined value, while a second spring 27, shorter than the previous one and also having a predetermined load, is positioned coaxially with the first and also bears, like the previous one, on the lower wall of the chamber 18.

In the duct 13 is located, in series, a three-way two-position valve 28 (illustrated in Figure 3), for example, a solenoid valve, which, in its normally open position, allows the passage of pressure from the intake duct to the pressure sensor 12 while, in its closed position, it cuts off the duct 13 and connects the pressure sensor 12 to the atmosphere.

The valve 28 is controlled by a device 29 which is operated when the accelerator 30 reaches a predetermined open position which will generally be very close to the maximum.

The control 29 simultaneously actuates the pump 31 of an injector 32 which emits atomised water into the intake duct 7 downstream of the air filter 8, the water being taken from an auxiliary tank 33.

Operation of the device

When the accelerator 30 does not surpass the predetermined open position, the operation of the device corresponds exactly to that of a normal supercharging unit and will not be described since it is generally known, at least to a person skilled in the art.

When the aceclerator control 30 reaches the predetermined open position, however, the device behaves in the manner described below.

The control 29 operates the valve 28 which moves from the normally open position illustrated in Figure 3 to the closed position in which the pressure sensor 12, which controls the waste-gate valve is put into communication with the atmosphere, and the duct 13 extending from the induction manifold 9 is closed.

Under these conditions the supercharging pressure in the intake duct almost instantly reaches values which are very high and/or at least greater than those existing in the normal operating range of the engine, in that all the exhaust gases are directed to the turbine 3 as a result of the fact that the waste-gate valve is inoperative.

The high supercharging pressure value is sensed by the device 15 through the duct 16.

As a result, the diaphragm 19 receives a strong downward thrust, compressing both the spring 26, which also occurs in the normal operating range of the engine, and the spring 27 which, having a higher calibrated value, is not normally compressed.

The piston 20 will thus be thrust downward more than normal and the feeler 25, which controls the increase in the fuel flow of the injection pump, will be located in correspondence with the groove 22, causing the pump 14 to reach the maximum fuel flow level which the engine is able to withstand for short periods of time.

Thus, there will be a sudden high surge in the power supplied by the engine.

In order not to reduce the engine life, this high power may only be used for short periods and this can be easily achieved by, for example, incorporating a timer switch in the control 29, which cuts off the action of the control after a predetermined period of time even if the accelerator 30 remains in the predetermined open position.

The device illustrated in Figure 1 also has a water injector 32 and associated accessory devices, which is put into operation by the control 29 simultaneously with the valve 28.

This allows the injection of a certain predetermined quantity of very finely atomised water into the intake duct upstream of the compressor 6 which, by mixing with the inducted air lowers the temperature both of the compressor and, a very important matter, of the compressed air directed to the combustion chamber to an appreciable extent.

Thus one of the greatest disadvantages of supercharged engines can be overcome without the need for providing a heat exchanger in the air supply system, which would be considerably more expensive or at least certainly more bulky and difficult to position. Clearly, however, the use of a water injection system like that described is an optional feature depending on the more or less harsh use for which the engine is intended.

**Claims**

1. Feed system for supercharged diesel engine, comprising:

a turbosupercharger (4) driven by the engine exhaust gases; an automatic overpressure valve (11) for the turbosupercharger;

a pressure sensor (12) sensing the pressure in the engine induction manifold (9) and arranged to operate the overpressure valve (11) at a predetermined pressure in the engine induction manifold, and

a fuel delivery regulator (15) connected to the engine injection pump (14) and controlled by the pressure in the induction manifold (9) according to a predetermined law, characterised in that:

— a three-way two-position valve (28) is placed in a duct (13) connecting the pressure sensor (12) with the induction manifold (9); said three-way valve (28) being movable between a normally open position, in which it opens the communication from the induction manifold (9) to the pressure sensor (12), and a closed position in which the said communication is interrupted and the pressure sensor (12) is connected to the atmosphere in order to inhibit operation of the said over-pressure valve (11);

— the fuel delivery regulator (15) is arranged to increase the delivery of fuel by the injection pump (14) substantially and automatically when the pressure in the induction manifold (9) exceeds a predetermined threshold, and

— a device (29) is associated with the engine accelerator control (30) for moving the three-way two-position valve (28) from its normally open to its closed position in dependence on a predetermined position of opening of the control (30).

2. Feed system according to Claim 1, characterised in that it further includes an injector (32) for injecting atomised water into the intake duct (7) of a compressor (6) connected to the turbosupercharger (4) and the induction manifold (9), the injector (32) withdrawing the water from a container (33).

3. Feed system according to Claim 2, characterised in that the injector (32) is operated by the device (29) simultaneously with the actuation of the three-way two-position valve (28).

**Patentansprüche**

1. Versorgungssystem für aufgeladene Dieselmotoren mit

einem von den Motorabgasen angetriebenen Turbolader (4),

einem automatischen Überdruckventil (11) für den Turbolader,

einem Druckfühler (12), der den Druck in dem Einlaßverteiler (9) des Motors aufnimmt und das Überdruckventil (11) bei einem bestimmten Druck in dem Einlaßverteiler des Motors betätigt, und mit einem Kraftstoff-Zufuhrregler (15), der mit der Motoreinspritzpumpe (14) verbunden ist und entsprechend einem gesetzmäßigen Zusammenhang durch den Druck in dem Einlaßverteiler (9) gesteuert wird, dadurch gekennzeichnet,

— daß ein in einen den Druckfühler (12) mit dem Einlaßverteiler (9) verbindenden Kanal (13) eingebautes Drei-Wege-Ventil (28) mit zwei Stellungen vorgesehen ist, das verstellbar ist zwischen einer üblicherweise offenen Stellung, in der die Verbindung von dem Einlaßverteiler (9) zu dem Druckfühler (12) offen ist, und einer geschlossenen Stellung, in der die Verbindung unterbrochen und der Druckfühler (12) mit der Atmosphäre verbunden ist, so daß eine Betätigung des Überdruckventils (11) verhindert wird,

— daß der Kraftstoff-Zufuhrregler (15), der, wenn der Druck in dem Einlaßverteiler (9) einen bestimmten Grenzwert überschreitet, die Kraftstoffzufuhr durch die Einspritzpumpe (14) wesentliche und automatische steigert und

— daß eine Vorrichtung (29) dem Motor-Beschleunigungssteuermittel (30) zugeordnet ist zum Verstellen des Drei-Wege-Ventils (28) mit zwei Stellungen aus seiner üblicherweise offenen in die gechlossene Stellung in Abhängigkeit von einer bestimmten Öffnungsstellung des Steuermittels (30).

2. Versorgungssystem nach Anspruch 1, gekennzeichnet durch eine Vorrichtung (32) zum Einspritzen von zerstäubtem Wasser in den Einlaßkanal (7) des Kompressors (6), der mit dem Turbolader (4) und dem Einlaßverteiler (9) verbunden ist, wobei die Einspritzvorrichtung (32) das Wasser einem Behälter (33) entnimmt.

3. Versorgungssystem nach Anspruch 2, dadurch gekennzeichnet, daß die Einspritzvorrichtung (32) von der Vorrichtung (29) gleichzeitig mit dem Betätigen des Drei-Wege-Ventils (28) mit zwei Stellungen betätigt wird.

**Revendications**

1. Système d'alimentation pour moteur diesel suralimenté comprenant:

un turbocompresseur (4) entraîné par les gaz d'échappement du moteur; une vanne automatique à surpression (11) pour le turbocompresseur;

un capteur de pression (12) détectant la pression dans la tubulure d'admission du moteur (9) capable d'actionner la soupape de surpression (11) pour une pression prédéterminée dans la tubulure d'admission du moteur, et

un régulateur d'alimentation en carburant (15) relié à la pompe d'injection du moteur (14) et commandé par la pression dans la tubulure d'admission (9) selon une loi prédéterminée, caractérisé en ce que:

— une vanne à deux positions et trois voies (28) est montée sur une conduite (13) reliant le capteur de pression (12) à la tubulure d'admission (9); ladite vanne à trois voies (28) étant mobile entre une position normalement ouverte, dans laquelle elle assure la communication entre la tubulure d'admission (9) et le capteur de pression (12), et une position fermée dans laquelle cette communication est coupée et fait communiquer le capteur de pression (12) avec l'atmosphère afin d'inhiber le fonctionnement de ladite soupape à sur-pression (11);

— le régulateur d'alimentation en carburant (15) est monté de manière à augmenter sensiblement et automatiquement la quantité de carburant délivrée par la pompe à injection (14) lorsque la pression dans la tubulure d'admission (9) dépasse un seuil prédéterminé; et

— un dispositif (29) est associé à la commande d'accélérateur du moteur (30) dans le but de déplacer la vanne à deux positions et trois voies (28) de sa position normalement ouverte à sa position fermée en fonction d'une position prédéterminée de l'ouverture de la commande (30).

2. Système d'alimentation selon la revendication 1, caractérisé en ce qu'il comprend en outre un injecteur (32) capable d'injecter de l'eau atomisée dans la conduite d'admission (7) d'un compresseur (6) relié au turbocompresseur (4) et à la turbine d'admission (9), l'injecteur (32) prélevant de l'eau d'un réservoir (33).

3. Système d'alimentation selon la revendication 2, caractérisé en ce que l'injecteur (32) est actionné par le dispositif (29) en même temps que la vanne (28) à trois voies et deux positions est commandée.

# FIG. 1

# FIG. 2

# FIG. 4

# FIG. 3